Europäisches Patentamt

European Patent Office

Office européen des brevets

(19)

(11) Veröffentlichungsnummer : **0 165 341**
**B1**

(12) EUROPÄISCHE PATENTSCHRIFT

(45) Veröffentlichungstag der Patentschrift :
25.05.88

(21) Anmeldenummer : 84115934.6

(22) Anmeldetag : 20.12.84

(51) Int. Cl.⁴ : **B 25 D 17/04**, B 25 D 17/24,
F 16 F 13/00

(54) Hydraulisch dämpfendes Einkammerlager und Anwendung in einem Handwerkzeug.

(30) Priorität : 23.03.84 DE 3410669

(43) Veröffentlichungstag der Anmeldung :
27.12.85 Patentblatt 85/52

(45) Bekanntmachung des Hinweises auf die Patenterteilung : 25.05.88 Patentblatt 88/21

(84) Benannte Vertragsstaaten :
AT BE CH DE FR GB IT LI NL

(56) Entgegenhaltungen :
EP-A- 0 066 779
DE-A- 1 752 856
DE-A- 3 023 544
GB-A- 2 137 132
US-A- 3 824 417

(73) Patentinhaber : Metabowerke GmbH & Co.
Gerberstrasse 31
D-7440 Nürtingen (DE)

(72) Erfinder : Keller, Michael, Dipl.-Ing. (BA)
Panoramastrasse 8
D-7440 Nürtingen (DE)

(74) Vertreter : Dreiss, Hosenthien & Fuhlendorf
Gerokstrasse 6
D-7000 Stuttgart 1 (DE)

## Beschreibung

Die Erfindung betrifft ein Dämpfungselement mit einem etwa glockenförmigen Gummifederelement, dessen Hohlraum mit einer Dämpfungsflüssigkeit gefüllt und unten durch eine Gummimembran dicht abgeschlossen ist, bei dem eine Grundplatte und der der Grundplatte gegenüberliegende Bereich des Gummifederelements symmetrisch zu einer Mittelachse Befestigungsmittel aufweisen und bei dem der dämpfungsflüssigkeitsgefüllte Hohlraum durch eine mit dem Befestigungsmittel des Gummifederelements starr verbundene, im wesentlichen senkrecht zur Hauptbeanspruchungsrichtung verlaufende Trennwand unterteilt ist und die so abgeteilten Hohlraumteile durch mindestens einen ringförmigen Überströmkanal miteinander in Verbindung stehen.

Ein solches aus der DE-A-31 40 783 oder auch der DE-A-30 23 544 bekanntes Dämpfungselement kann nur Schwingungen, die in Achsrichtung auftreten, ausreichend im gewünschten Frequenzbereich durch die Viskosität der Dämpfungsflüssigkeit dämpfen. Sollen aber räumlich auftretende Schwingungen, insbesondere überlagerte translatorische und rotatorische Schwingungen durch die Viskosität der Dämpfungsflüssigkeit gedämpft werden, so sind mehrere Dämpfungselemente erforderlich, die in verschiedenen Richtungen in die Geräte eingebaut werden müssen, um eine ausreichende Dämpfung zu erhalten. Die Dämpfung durch das Gummifederelement selbst reicht nicht aus. Hier wird der Einbau wesentlich kompliziert und aufwendig bei gleichzeitiger wesentlicher Erhöhung des Konstruktionsgewichtes.

Die bekannten Dämpfungselemente mit Dämpfungsflüssigkeit haben den Vorteil, daß durch die Flüssigkeit auch relativ niedrig frequente Schwingungen im Bereich zwischen wenigen Hz und 300 Hz gut abgedämpft werden können, während durch reine Gummidämpfer Schwingungen erst oberhalb einer Frequenz von etwa 300 Hz befriedigend gedämpft werden.

Aus den EP-A-00 66 779, DE-A-31 24 227, 31 24 229 und 31 24 330 sind in Werkzeugen eingebaute Dämpfungsvorrichtungen mit schwingenden Massen beschrieben, durch die bestimmte besonders störende Arbeitsfrequenzen eine optimale Dämpfung erlauben. Durch die zusätzlichen Gewichte erfolgt aber eine Komplizierung der Konstruktion und eine wesentliche Erhöhung des Konstruktionsgewichtes, was gerade bei Handwerkzeugen unerwünscht ist. Der Einbau reiner Gummifederelemente zwischen Handgriff und dem eigentlichen Handwerkzeug ist aus der DE-A-17 52 856 und dem deutschen Gebrauchsmuster DE-U-74 05 791 bekannt. Wie schon ausgeführt, können mit diesen Dämpfungselementen niedrig frequente Schwingungen nicht ausreichend abgedämpft werden.

Aus den DE-A-30 19 337 und 24 60 375 sind noch weitere Dämpfungselemente bekannt, die aber auch nur in einer Achsrichtung optimal dämpfen, die also bei einer räumlichen Schwingung nur eine Richtungskomponente befriedigend dämpfen können.

Aufgabe der vorliegenden Erfindung ist es, ein Dämpfungselement der eingangs genannten Art so zu verbessern, daß auch räumliche Schwingungen, insbesondere überlagerte translatorische und rotatorische Schwingungen im niedrigen Frequenzbereich gedämpft werden.

Zur Lösung dieser Aufgabe sieht die Erfindung vor, daß in der Trennwand verteilt zusätzliche Überströmkanäle vorgesehen sind, daß weiter Zusatztrennwände vorgesehen sind, und daß diese Zusatztrennwände im Winkel zur die Überströmkanäle aufweisenden Trennwand gerichtet sind.

Durch die Anordnung der Zusatztrennwände können räumliche Schwingungen durch die Dämpfungsflüssigkeit gedämpft werden. Vorteilhaft kann dazu die die Überströmkanäle aufweisende Trennwand bis nahe an einen etwa zylindrischen Wandteil des Gummifederelements reichen und so einen ebenfalls als Überströmkanal wirkenden Ringspalt bilden, um so eine ausreichende Bewegungsfreiheit für die Trennwand für eine dreidimensionale Bewegung zu gewährleisten. Besonders vorteilhaft können Torsionsschwingungen um die Mittelachse dadurch besonders gut gedämpft werden, daß die Zusatztrennwände radial zur Mittelachse des Gummifederelements verlaufen. Dazu sind dann die Zusatztrennwände zweckmäßigerweise senkrecht zur die Überströmkanäle aufweisenden Trennwand gerichtet. Das Maß der Dämpfung kann durch die Wahl der Dämpfungsflüssigkeit beeinflußt werden. Einen wesentlichen Einfluß gibt auch die Ausbildung der freien Randkontur. Beispielsweise wird eine besonders hohe Torionsdämpfung damit erreicht, daß die freie Randkontur der Zusatztrennwand etwa der Innenkontur des Gummifederelements entspricht. Zusätzlich können noch auf der Innenseite des Gummifederelements zwischen die Zusatztrennwände ragende Bremsflächen vorgesehen sein, so daß die Bremsflächen und die Zusatztrennwände praktisch sternförmig ineinander greifend angeordnet sind.

Herstellungsmäßig besonders einfach können die Zusatztrennwände durch einen flügelradartigen Einsatz gebildet sein, der achssymetrisch fest mit dem Befestigungsmittel des Gummifederelements verbunden ist.

Eine dreidimensionale Dämpfung kann auch weiter dadurch erreicht werden, daß die die Überströmkanäle aufweisende Trennwand gewölbt ausgebildet ist, wobei die Wölbung vorzugsweise zur Gummimembran hin offen ist. Eine weitere Erhöhung der mehrdimensionalen Dämpfung kann dadurch erreicht werden, daß die Wölbung durch radial verlaufende weitere Trennwände versteift ist.

Zur sicheren Übertragung von Torsionsschwingungen um die Symmetrieachse kann das gummifederelementseitige Befestigungsmittel eine senkrecht zur Mittelachse verlaufende Hülse sein, die dann durch einen einfachen Bolzen oder Schraube am entsprechenden Maschinenteil befestigt werden kann.

Zur festen Verankerung im Gummifederelement kann der Einsatz über ein dicht und fest im Gummifederelement eingelassenes bolzenartiges Verbindungsstück mit der Hülse verbunden sein.

Um eine möglichst temperaturneutrale Dämpfung zu erhalten, kann in vorteilhafter Weise als Dämpfungsflüssigkeit ein in seiner Viskosität wenig temperaturabhängiges Öl, vorzugsweise Silikonöl dienen.

Aus der EP-A-00 66 779 ist ein elektromotorisch angetriebenes Handwerkzeug in Form eines Schlagbohrhammers bekannt mit einem in einem Gehäuse vorgesehenen Antrieb und mindestens einem zur Vibrationsherabsetzung und Dämpfung nachgiebig mit dem Gehäuse verbundenen in seiner Relativbewegung gegenüber dem Gehäuse durch mindestens ein Dämpfungselement gebremstem Handgriff. Zur Schlagdämpfung dienen hier Zusatzmassen, durch die das Maschinengewicht beträchtlich erhöht wird, was für handgeführte motorisch angetriebene Werkzeuge unerwünscht ist. Die bekannte Schwingungsdämpfung wirkt außerdem nur in der Schlagbohrrichtung. Untersuchungen haben aber bei vielen motorisch angetriebenen Handwerkzeugen wie Schlag- und/oder Bohrhämmer, Schwingschleifer, Winkelschleifer, Niethämmer od. dgl. ergeben, daß Vibrationen, Griffbeschleunigungen gleicher Dimension in allen drei Koordinatenrichtungen auftreten. Da die Griffbeschleunigungen primär aus der Erzeugung und Übertragung von Schlägen sowie aus Drehbewegungen resultieren, ist eine mehrdimensionale Dämpfung von großem Vorteil. Es ist bekannt, durch Gummielemente Vibrationsdämpfungen von Frequenzen über ca. 200 Hz zu erreichen. Da aber für das menschliche Hand-Arm-System niederfrequente Schwingungen gesundheitsgefährdernder sind, sollten diese Schwingungsanteile bestmöglich gedämpft werden. Um eine wirkungsvolle Vibrationsdämpfung zu erreichen, ist es erforderlich, daß die Eigenfrequenz des Dämpfungssystems mindestens um den Faktor 2 unter kritisch zur Erregerfrequenz liegt. Beispielsweise für elektropneumatische Bohrhämmer sind Schlagzahlen um 3 000/min. üblich, so daß sich Erregerfrequenzen um 50 Hz ergeben. Es sollte zur Erzielung einer guten Dämpfung die Resonanzfrequenz des Dämpfungssystems entsprechend unter 35 Hz liegen.

Aufgabe der vorliegenden Erfindung ist es, motorisch angetriebene Handwerkzeuge mit möglichst geringem Aufwand an Konstruktionsgewicht für die besonders störenden niedrigen Frequenzen optimal zu dämpfen. Zur Lösung dieser Aufgabe sieht die Erfindung vor, daß zur Vibrationsherabsetzung und Schwingungsdämpfung mindestens ein Dämpfungselement der vorbeschriebenen Art dient, das zwischen dem Handgriff und dem Gehäuse angeordnet ist.

Bei einem Handwerkzeug für ein in Richtung einer Schlagachse vortreibbares Werkzeug kann zweckmäßigerweise die Mittelachse des Dämpfungselements und die Schlagachse mindestens parallel zueinander verlaufend, vorzugsweise aber fluchtend angeordnet sein, um ein möglichst schwingungsgeschütztes Arbeiten zu erreichen. Bei einem Handwerkzeug, bei dem der Handgriff an mindestens zwei vorzugsweise drei Stellen mit dem Gehäuse verbunden ist, kann die in der Fluchtlinie der Schlagachse liegende Verbindung durch das Dämpfungselement erfolgen, wobei dann die weiteren nachgiebigen Verbindungen im Abstand davon vorgesehen sind und mindestens eine durch Gummielemente abgefederte Pendelbewegung zwischen dem Handgriff und dem Gehäuse um die Schlagachse zulassen, so daß auch auftretende Torsionsschwingungen optimal ohne wesentliche Erhöhung des Werkzeuggewichts gedämpft werden können.

Hierzu kann eine einfache Kopplung dadurch erfolgen, daß der Handgriff und das Gehäuse jeweils zwei Stege aufweisen, daß ferner die Stege des Gehäuses und des Handgriffs sich überlappen, wobei dann zwischen den Stegen die Gummielemente vorgesehen sind und in Richtung der Pendelbewegung die Stege und die Gummielemente durchragend ein Führungsbolzen vorgesehen ist. Dabei verlaufen die Stege etwa senkrecht zur Drehschwingbewegung und damit radial zur Schlagachse. Weiter können zusätzlich auch zur Dämpfung axialer Stöße der Führungsbolzen durch zwei Stege des Handgriffs oder des Gehäuses gehalten und gegenüber den beiden anderen Stegen des Gehäuses oder des Handgriffs durch ein weiteres Gummielement radial nachgiebig gehalten sein. Vorzugsweise kann das weitere Gummielement eine Hülsenfeder sein, die besonders einfach montierbar ist und durch Aufnahme auch sehr hoher Belastungen nicht überbeansprucht wird. Die Hülsenfeder kann in Bohrungen der beiden inneren Stege radial aufgenommen sein, so daß eine Montage durch einfaches Einstecken erfolgt, wobei sich weiter eine axiale Sicherung erübrigt, wenn die Hülsenfeder in axialer Richtung stirnseitig über die beiden zwischen den Stegen vorgesehenen Gummielemente und den äußeren Stegen lagegesichert ist.

Weitere erfindungsgemäße Ausbildungen sind den Unteransprüchen zu entnehmen und werden mit ihren Vorteilen in der nachstehenden Beschreibung näher erläutert. In den beigefügten Zeichnungen zeigt :

Figur 1   eine Ansicht eines Schlagbohrhammers,

Figur 2   einen Schnitt durch ein rotationssymmetrisch ausgebildetes Dämpfungselement,

Figur 3   Erregungsfunktion und Antwortfunktion bei einem gedämpften System,

Figur 4   eine Ansicht eines Schlagbohrwerkzeugs im Griffbereich geschnitten,

Figuren 5 u. 6   der Fig. 4 entsprechende Teilansichten anderer Ausführungsformen der Griffverbindung mit dem Gehäuse,

Figuren 7 u. 8   zwei Ausführungsformen der Grifflagerung am Gehäuse entsprechend einem Schnittverlauf der Linie VII-VII in Fig. 4,

Figur 9 einen Schnitt durch ein dem Ausführungsbeispiel der Figur 2 weitgehend entsprechendes Ausführungsbeispiel eines Dämpfungselements.

Für alle folgenden Ausführungsbeispiele werden für die entsprechenden Teile die gleichen Bezugszeichen verwendet.

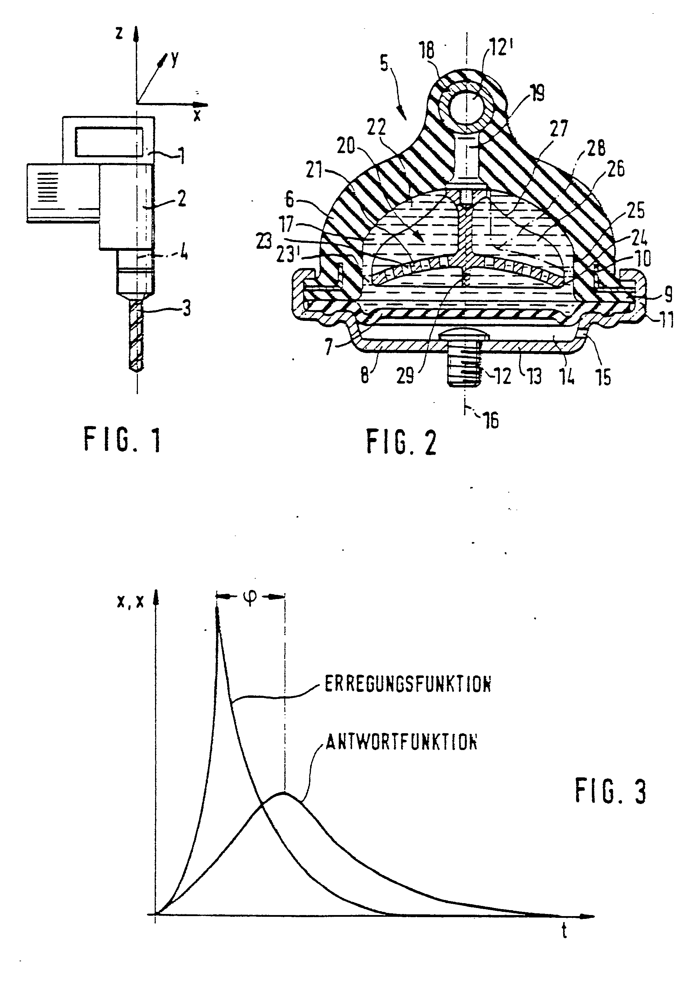

Der in Fig. 1 dargestellte Schlagbohrhammer besteht im wesentlichen aus einem Handgriff 1, der mit einem den Antrieb aufnehmenden Gehäuse 2 in später beschriebener Weise verbunden ist und einem Werkzeug 3, das um eine Schlagachse 4 drehbar und in Richtung des Werkzeugs durch den Antrieb vortreibbar ist. Schematisch ist noch ein Koordinatensystem XYZ eingezeichnet, wobei die Z-Achse mit der Schlagachse 4 fluchtet.

In Fig. 2 ist ein Schnitt durch ein im wesentlichen rotationssymmetrisch ausgebildetes Dämpfungselement 5 dargestellt, das zur räumlichen Schwingungsdämpfung verwendet werden kann. Es weist ein glockenförmiges Gummifederelement 6 auf, das unten durch eine Gummimembran 7 und eine Grundplatte 8 aus Metall verschlossen ist. Zum dichten Abschluß ist der Rand 9 mit einer umlaufenden Metallverstärkung 10 verstärkt und durch eine Umbördelung 11 der Grundplatte 8 ist die Gummimembran 7 dicht mit dem Gummifederelement 6 verbunden.

Die Grundplatte 8 ist napfförmig ausgebuchtet, so daß zwischen der Gummimembran 7 und dem ein Befestigungsmittel 12 tragenden Boden 13 eine Luftkammer 14 gebildet ist, die über ein Entlüftungsloch 15 mit der freien Atmosphäre in Verbindung steht. Das Befestigungsmittel 12 ist eine fest im Boden 13 verankerte Schraube, die fluchtend in der Mittelachse 16 des Dämpfungselements 5 liegt.

Der vom Gummifederelement 6 und der Gummimembran 7 gebildete Hohlraum ist mit einer Dämpfungsflüssigkeit 17 bspw. mit in seiner Viskosität wenig tempaturabhängigem Öl, vorzugsweise Silikonöl, vollständig gefüllt.

Dem Befestigungsmittel 12 gegenüberliegend ist im Gummifederelement 6 fest verankert ein weiteres Befestigungsmittel 12' in Form einer Hülse 18 vorgesehen, wobei diese Hülse 18 senkrecht zur Mittelachse 16 gerichtet und fest mit einem Verbindungsstück 19 verbunden ist, das bis in das Innere des Gummifederelements 6 reicht. Vom Verbindungsstück 19 wird ein flügelradartiger Einsatz 20 getragen. Dieser weist eine kugelkalottenförmig geformte Trennwand 21 auf, durch die der durch die Dämpfflüssigkeit 17 gefüllte Hohlraum 22 unterteilt wird. In der Trennwand 21 sind verteilt Überströmkanäle 23 vorgesehen und es liegt auch der umlaufende Rand 24 der Trennwand 23 nicht an einem zylindrisch ausgebildeten Teil 25 des Gummifederelements 6 an, sondern läßt dort ebenfalls noch einen ringförmigen Überströmkanal 23'.

Zwischen dem Verbindungsstück 19 und der Trennwand 21 sind zusätzliche radial verlaufende Zusatztrennwände 26 vorgesehen. Sie sind sternförmig zur Mittelachse 16 angeordnet und ihr gummifederelementseitiger Rand 27 ist etwa an die Innenkontur des Gummifederelements 6 angepaßt.

Weiter können noch wie in Fig. 2, rechte Seite strichpunktiert angedeutet vom Gummifederelement 6 nach innen ragende Bremsflächen 28 vorgesehen sein, die in nicht verspanntem Zustand mittig zwischen den Zusatztrennwänden 26 hineinragen.

Schließlich können auf der Unterseite der Trennwand 21 noch radial verlaufende weitere Trennwände 29 vorgesehen sein, die aber den Rand 24 nicht nach unten überragen.

Die Funktion des Dämpfungselements ist nun folgende : Bei einer wechselnden Belastung in Richtung der Mittelachse 16 durchströmt die Dämpfungsflüssigkeit 17 entgegengesetzt der Kraftwirkung die Überströmkanäle 23 und 24 und dämpft so die Bewegung in der Z-Richtung oder entgegengesetzt hierzu. Insbesondere bei hoher Frequenz wird durch den Werkstoff des Gummifederelements 6 eine weitere Dämpfung erreicht. Dies gilt insbesondere bei Frequenzen über etwa 200 Hz. Eine weitgehende Anpassung der Dämpfung an die Erregerfrequenz und die gekoppelten Massen kann durch die Werkstoffauswahl des Gummifederelements 6 die Abmessungen, insbesondere des Einsatzes 20 in weiten Grenzen erfolgen. Bei einer axialen Grenzbelastung in Richtung zur Grundplatte 8 hin kann die Gummimembran 7 am Boden 13 der Grundplatte 8 anliegen, so daß auch bei im Normalbetrieb nicht üblichen großen axialen Belastungen keine Beschädigungen des Dämpfungselements 5 auftreten.

Diese Maßnahme dient auch der Vermeidung hoher Andrückkräfte. Bei hohen Andrückkräften ergibt sich bei gleicher Schwingserregung eine höhere Vibrationsbelastung für das Hand-Arm-System des Menschen (geringe Dämpfung in den Gewebeschichten). Hohe Andrückkräfte bewirken durch das Anliegen der Gummimembran 7 an die Grundplatte 8 eine Verhärtung des Elementes und somit eine Verringerung des Bedienungskomforts. Höchster Bedienungskomfort wird somit bei niedriger, das Hand-Arm-System am wenigsten gefährdenden Andrückkräften erreicht.

Bei einer Torsionsschwingung um die Z-Achse des Befestigungsmittels 12' gegenüber dem Befestigungsmittel 12 erfolgt über den Einsatz 20, insbesondere durch die Zusatztrennwände 26 eine Torsionsschwingungsdämpfung. Zur Abstimmung der Dämpfung können in den Zusatztrennwänden 26 und den weiteren Trennwänden 29 gegebenenfalls weitere Überströmkanäle angeordnet werden.

Insbesondere bei schlagenden handgeführten Maschinen und Geräten treten von allem stoß- und impulsartige Schwingungserregungen auf. Durch die Verwendung von Dämpfungselementen 5 erfolgt eine Abschwächung und eine Phasenverzögerung des Amplituden- bzw. Beschleunigungsmaximums der Antwortfunktion gegenüber der Erregerfunktion. Dieses Verhalten ist in Fig. 3 dargestellt. Durch die erreichte Dämpfung erfolgt eine Minderung der Vibrationsbelastung bspw. bei Handwerkzeugen.

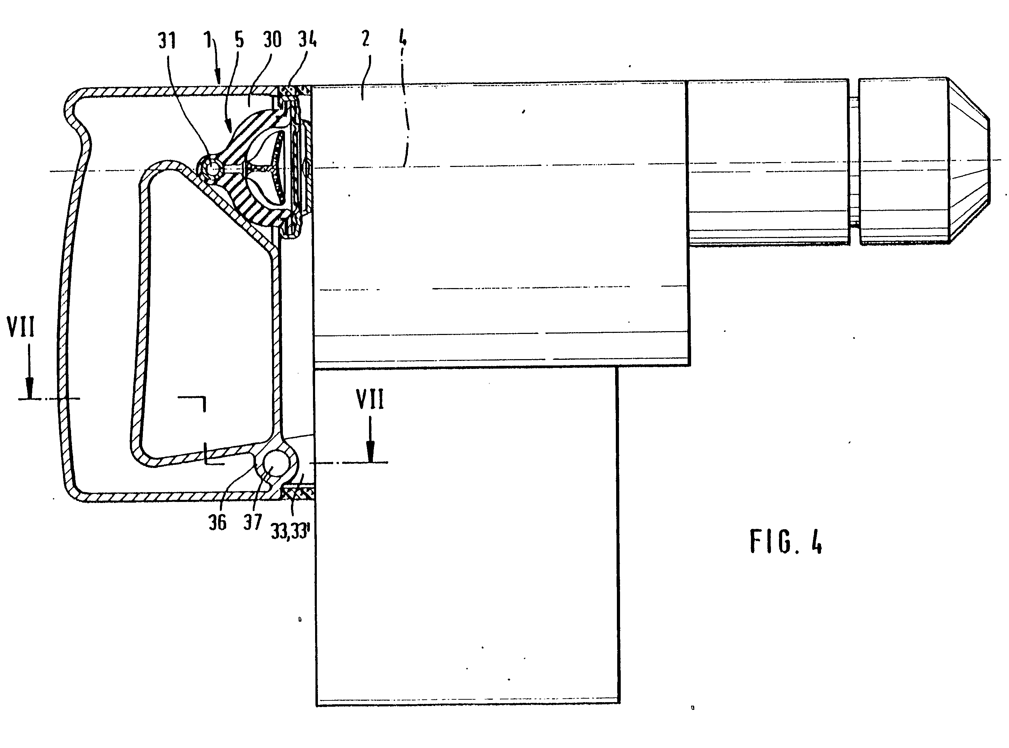

Anwendungsmöglichkeiten von Dämpfungselementen 5 in einem schwingungsgedämpften Griffsystem eines Schlagbohrhammers sind in verschiedenen Ausführungsformen in den Figuren 4 bis 8 dargestellt.

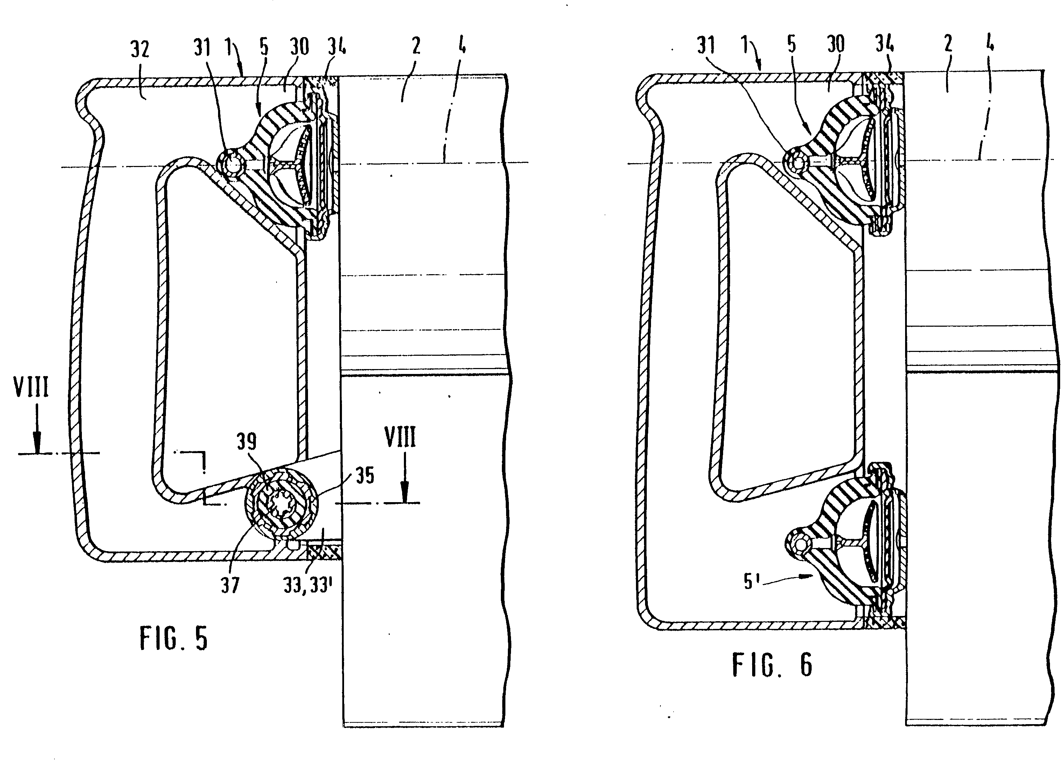

Bei den Ausführungsbeispielen der Figuren 4 bis 6 ist in einem Hohlraum 30 des Handgriffs 1 fluchtend zur Schlagachse 4 ein Dämpfungselement 5 angeordnet. Dabei ist die Hülse 18 über einen Bolzen 31 zwischen den Seitenwänden 32 fest verankert, während die Grundplatte 8 des Dämpfungselements 5 über sein Befestigungsmittel 12 mit dem Gehäuse 2 fest verbunden ist. Die andere Griffseite ist an Stegen 33,33′ des Gehäuses 2 angelenkt (Fig. 4 und 5). Bei der Ausführungsform der Fig. 6 ist der Handgriff 1 über zwei Dämpfungselemente 5,5′ mit dem Gehäuse 2 gekoppelt.

Zur Abdichtung ist zwischen dem Gehäuse 2 und dem Handgriff 1 ein elastischer Dichtungsteil 34, vorzugsweise ein Ring aus geschäumtem Kunststoff vorgesehen, der ebenfalls zur Schwingungsdämpfung mit beitragen kann und ein Eindringen von Schmutz und Feuchtigkeit verhindert.

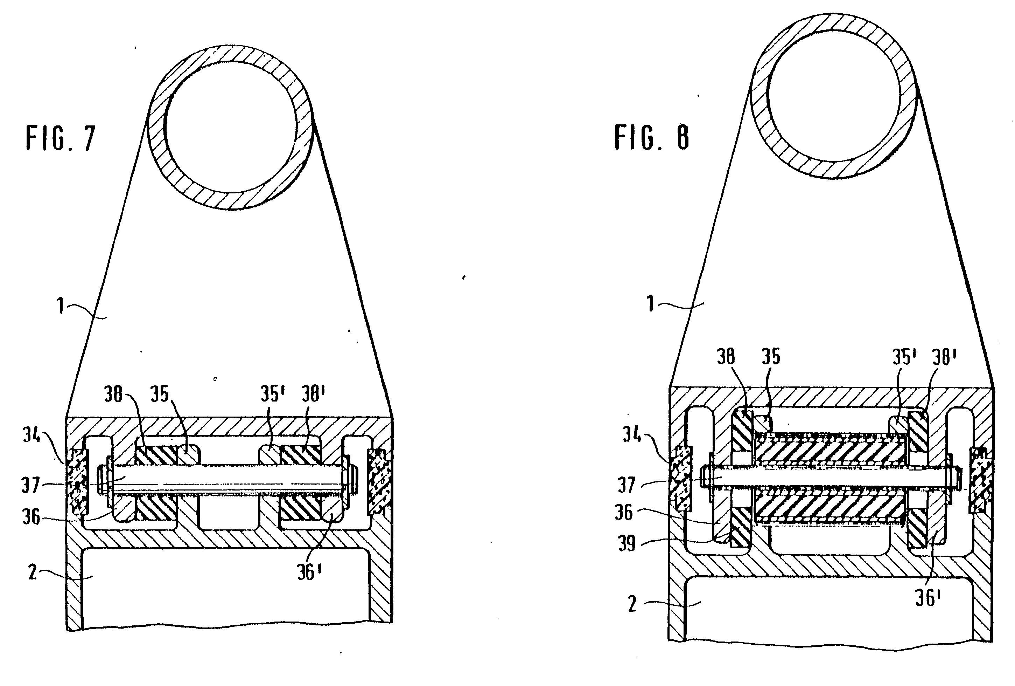

Die Verbindung des Handgriffs 1 mit dem Gehäuse 2 im Bereich der Linie VII in Fig. 4 ist durch einen entsprechenden Schnitt in Fig. 7 in größerem Maßstab dargestellt.

Am Gehäuse 2 sind zwei Stege 35,35′ gegen den Handgriff 1 hervorspringend angeordnet. Entsprechend sind auch mit größerem Abstand voneinander am Handgriff 1 Stege 36,36′ vorgesehen. Alle vier Stege 35,35′, 36,36′ sind von einem axial gesicherten Führungsbolzen 37 durchdrungen, wobei zwischen den Stegen 35 und 36 und 35′, 36′ jeweils ein rohrabschnittförmiges Gummielement 38 bzw. 38′ angeordnet ist. Der Führungsbolzen 37 ist mit ausreichend großem Spiel in den Stegen 35, 35′, 36, 36′ angeordnet, daß um die Schlagachse 4 eine gewisse Schwingbewegung für den Handgriff 1 möglich ist, die von den Gummielementen 38,38′ abgefangen, gedämpft und begrenzt wird. Besonders niedere Frequenzen werden durch das im Handgriff 1 im Bereich der Schlagachse 4 angeordnete Dämpfungselement 5 aufgenommen und gedämpft. Beim in Fig. 7 dargestellten Ausführungsbeispiel erfolgt allerdings eine direkte Impulsübertragung von zur Schlagachse 4 parallelen Schlägen im Bereich des Führungsbolzens 37. Diese werden nach der Ausführungsform der Fig. 8 durch ein weiteres Gummielement 39 in Form einer Hülsenfeder aufgenommen und gedämpft, die auf dem Führungsbolzen 37 angeordnet und von den Stegen 35, 35′ in entsprechend großen Bohrungen aufgenommen ist. Stirnseitig ist das weitere Gummielement 39 durch die Gummielemente 38, 38′ lagegesichert, so daß sonst keine weitere axiale Sicherung erforderlich ist. Im übrigen entsprechen sich die Ausbildungen der Fig. 7 und 8 weitgehend, so daß sich eine weitere Beschreibung erübrigt.

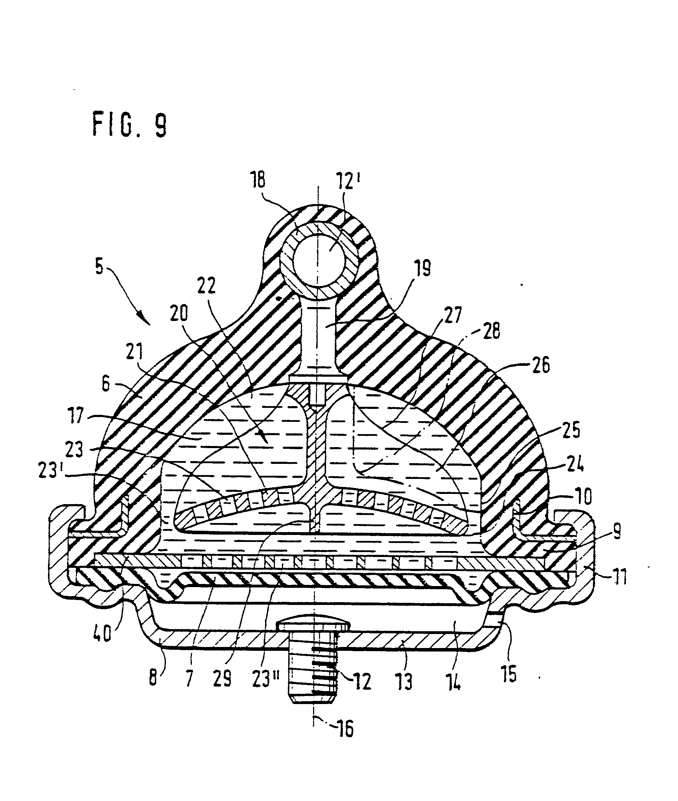

Beim in Fig. 9 dargestellten weiteren Ausführungsbeispiel eines Dämpfungselementes ist zum Schutz einer Überbeanspruchung des Gummifederelements 6 bei hohen Zugkräften zwischen dem Rand 9 des Gummifederelements 6 und der Gummimembran 7 eine Hubbegrenzungsplatte 40 dicht angeordnet. Auf der Hubbegrenzungsplatte 40 sind verteilt Überströmkanäle 23″ vorgesehen, die ein Durchströmen der Dämpfungsflüssigkeit 17 unter Drosselung erlauben, so daß eine Schwingungsdämpfung durch diese Überströmkanäle 23″ und zusätzlich noch durch die durch das Entlüftungsloch 15 durchtretende Luft erfolgt. Kommt bei einem axialen Zug die Gummimembrane 7 an der Hubbegrenzungsplatte 40 zur Anlage, so kann das Gummifederelement 6 in axialer Richtung praktisch nicht mehr nachgeben und wird sehr steif. Damit wird eine axiale Überlängung verhindert, durch die unter Umständen der Rand 9 des Gummifederelements 6 aus der Umbördelung 11 herausgerissen werden könnte. Es liegt im Rahmen des vorhergehend Beschriebenen, daß bei den Anwendungsbeispielen der Fig. 4 bis 8 gegebenenfalls zum Ersetzen eines Längsanschlages Dämpfungselemente entsprechend der Figur 9 verwendet werden können.

## Patentansprüche

1. Dämpfungselement (5) mit einem etwa glockenförmigen Gummifederelement (6), dessen Hohlraum (22) mit einer Dämpfungsflüssigkeit (17) gefüllt und unten durch eine Gummimembran (7) dicht abgeschlossen ist, bei dem eine Grundplatte (8) und der der Grundplatte (8) gegenüberliegende Bereich des Gummifederelements (6) symmetrisch zu einer Mittelachse (16) Befestigungsmittel (12,12′) aufweisen und bei dem der dämpfungsflüssigkeitsgefüllte Hohlraum (22) durch eine mit dem Befestigungsmittel (12) des Gummifederelements (6) starr verbundene, im wesentlichen senkrecht zur Hauptbeanspruchungsrichtung (Z) verlaufende Trennwand (21) unterteilt ist und die so abgeteilten Hohlraumteile durch mindestens einen ringförmigen Überströmkanal (23′) miteinander in Verbindung stehen, dadurch gekennzeichnet, daß in der Trennwand (21) verteilt zusätzliche Überströmkanäle (23) vorgesehen sind, daß weiter Zusatztrennwände (26) vorgesehen sind, und daß diese Zusatztrennwände (26) im Winkel zur die Überströmkanäle (23) aufweisenden Trennwand (21) gerichtet sind.

2. Dämpfungselement nach Anspruch 1, dadurch gekennzeichnet, daß die die Überströmkanäle (23) aufweisende Trennwand (21) bis nahe an einen etwa zylindrischen Wandteil (25) des Gummifederelements (6) reicht und so einen ebenfalls als Überströmkanal (23′) wirkenden Ringspalt bildet.

3. Dämpfungselement nach Anspruch 1 oder 2, dadurch gekennzeichnet, daß die Zusatztrennwände (26) radial zur Mittelachse (16) des Gummifederelements (6) verlaufen.

4. Dämpfungselement nach Anspruch 1 oder 3, dadurch gekennzeichnet, daß die Zusatztrennwände (26) senkrecht zur die Überströmkanäle (23) aufweisende Trennwand (21) gerichtet sind.

5. Dämpfungselement nach Anspruch 3 oder 4, dadurch gekennzeichnet, daß die freie Randkontur der Zusatztrennwände (26) etwa der Innenkontur des Gummifederelements (6) entspricht.

6. Dämpfungselement nach einem der Ansprüche 3 bis 5, dadurch gekennzeichnet, daß auf der Innenseite des Gummifederelements (6) zwischen die Zusatztrennwände (26) ragende, gegebenenfalls zusätzliche Überströmkanäle aufweisende Bremsflächen (28) vorgesehen sind.

7. Dämpfungselement nach einem der Ansprüche 1 bis 6, dadurch gekennzeichnet, daß die Zusatztrennwände (26) durch einen flügelradartigen Einsatz (20) gebildet sind, der achssymmetrisch fest mit dem Befestigungsmittel (12'). des Gummifederelements (6) verbunden ist.

8. Dämpfungselement nach Anspruch 1, dadurch gekennzeichnet, daß die die Überströmkanäle (23) aufweisende Trennwand (21) gewölbt ausgebildet ist, wobei die Wölbung zur Gummimembran (7) hin offen ist.

9. Dämpfungselement nach Anspruch 8, dadurch gekennzeichnet, daß die Wölbung durch radial verlaufende weitere Trennwände (29) versteift ist.

10. Dämpfungselement nach Anspruch 9, dadurch gekennzeichnet, daß die unteren Ränder der weiteren Trennwände (29) eben zum Rand (24) der Wölbung verlaufen.

11. Dämpfungselement nach einem der Ansprüche 1 bis 10, dadurch gekennzeichnet, daß das gummifederelementseitige Befestigungsmittel (12') eine senkrecht zur Mittelachse (16) verlaufende Hülse ist.

12. Dämpfungselement nach Anspruch 7 und 11, dadurch gekennzeichnet, daß der Einsatz (20) über ein dicht und fest im Gummifederelement (6) angeordnetes bolzenartiges Verbindungsstück (19) mit der Hülse (18) verbunden ist.

13. Dämpfungselement nach einem der Ansprüche 1 bis 12, dadurch gekennzeichnet, daß über der den Hohlraum (22) unten abschließenden Gummimembrane (7) eine von weiteren Überströmkanälen (23") durchbrochene Hubbegrenzungsplatte (40) für die Gummimembran (7) angeordnet ist, die vorzugsweise zwischen der Gummimembran (7) und dem Rand (9) des Gummifederelements (6) dicht gehalten ist.

14. Dämpfungselement nach einem der Ansprüche 1 bis 13, dadurch gekennzeichnet, daß unterhalb der den Hohlraum (22) unten abschließenden Gummimembran (7) die Grundplatte (8) zur Begrenzung des Hubs der Gummimembrane (7) nach unten vorgesehen ist, wobei zwischen der Gummimembrane (7) und der Grundplatte (8) eine Luftkammer (14) vorgesehen ist, die mit mindestens einem Entlüftungsloch (15) mit der freien Atmosphäre in Verbindung steht.

15. Motorisch angetriebenes Handwerkzeug, insbesondere Schlag- und/oder Bohrhammer, Schwingschleifer, Winkelschleifer, Niethammer, Tacker oder Nagler mit einem in einem Gehäuse (2) vorgesehenen Antrieb und mindestens einem zur Vibrationsherabsetzung gedämpft nachgiebig mit dem Gehäuse (2) verbundenen und in seiner Relativbewegung gegenüber dem Gehäuse (2) durch mindestens ein Dämpfungselement (5) gebremsten Handgriff (1), dadurch gekennzeichnet, daß zur Vibrationsherabsetzung und Schwingungsdämpfung mindestens ein Dämpfungselement (5) nach einem oder mehreren der Ansprüche 1 bis 15 dient, das bzw. die zwischen dem Handgriff (1) und dem Gehäuse (2) angeordnet sind.

16. Handwerkzeug nach Anspruch 15, für ein in Richtung einer Schlagachse (4) vortreibbares Werkzeug (3), dadurch gekennzeichnet, daß die Mittelachse (16) des Dämpfungselementes (5) und die Schlagachse (4) mindestens parallel zueinander verlaufen, vorzugsweise aber fluchten.

17. Handwerkzeug nach Anspruch 16, bei dem der Handgriff (1) an mindestens zwei vorzugsweise drei Stellen mit dem Gehäuse verbunden ist, dadurch gekennzeichnet, daß die in der Fluchtlinie der Schlagachse (4) liegende Verbindung über das Dämpfungselement (5) erfolgt und daß die weiteren im Abstand davon vorgesehenen nachgiebigen Verbindungen mindestens durch Gummielemente (38, 38', 39) abgefederte Pendelbewegung zwischen Handgriff (1) und Gehäuse (2) um die Schlagachse (4) zulassen (Fig. 7 und 8).

18. Handwerkzeug nach Anspruch 17, dadurch gekennzeichnet, daß der Handgriff (1) und das Gehäuse (2) jeweils zwei Stege (36, 36', 35, 35') aufweisen, daß die Stege (35, 35', 36, 36') des Gehäuses (2) und des Handgriffs (1) sich überlappen und daß zwischen den Stegen (35, 36, 35', 36') die Gummielemente (38, 38') vorgesehen sind.

19. Handwerkzeug nach Anspruch 17 oder 18, dadurch gekennzeichnet, daß in Richtung der Pendelbewegung die Stege (35, 35', 36, 36') und die Gummielemente (38, 38') durchragend ein Führungsbolzen (37) vorgesehen ist, wobei die Stege (35, 35', 36, 36') etwa radial zur Schlagachse (4) verlaufen.

20. Handwerkzeug nach Anspruch 19, dadurch gekennzeichnet, daß der Führungsbolzen (37) durch zwei Stege (36, 36') oder (35, 35') des Handgriffs (1) oder des Gehäuses (2) gehalten ist und gegenüber den beiden Stegen des Gehäuses (2) des Handgriffs (1) durch ein weiteres Gummielement (39) radial nachgiebig gehalten ist.

21. Handwerkzeug nach Anspruch 20, dadurch gekennzeichnet, daß das weitere Gummielement (39) eine Hülsenfeder ist.

22. Handwerkzeug nach Anspruch 21, dadurch gekennzeichnet, daß die Hülsenfeder in Bohrungen der beiden inneren Stege (35, 35') radial aufgenommen ist.

23. Handwerkzeug nach Anspruch 22, dadurch gekennzeichnet, daß die Hülsenfeder in axialer Richtung stirnseitig über die beiden zwischen den Stegen (35, 36, 35', 36') vorgesehenen Gummielemente (38, 38') und den äußeren Stegen (36, 36') lagegesichert ist (Fig. 8).

24. Handwerkzeug nach Anspruch 15, dadurch gekennzeichnet, daß der Handgriff (1) über zwei Dämpfungselemente (5) mit einem Gehäuse (2) nachgiebig verbunden ist, wobei eines der Dämpfungselemente (5) etwa in Verlängerung der Schlagachse (4) und das andere Dämpfungselement (5') im senkrechten Abstand davon vorgesehen ist (Fig. 6).

25. Handwerkzeug nach einem der Ansprüche 15 bis 24, dadurch gekennzeichnet, daß zwischen einem umlaufenden Rand des Handgriffs (1) und dem Gehäuse (2) ein elastischer Dichtungsteil (34) vorgesehen ist, vorzugsweise ein Ring aus geschäumtem Kunststoff oder ein Faltenbalk ist.

26. Handwerkzeug nach Anspruch 11 oder einem der Ansprüche 15 bis 24, dadurch gekennzeichnet, daß die Hülse (18) des Dämpfungselementes (5) zwischen zwei Seitenwänden (32) in einem Hohlraum (30) des Handgriffs (1) aufgenommen und durch einen durch die Seitenwände (32) gehaltenen Bolzen (31) fixiert ist.

27. Handwerkzeug nach einem der Ansprüche 15 bis 26, dadurch gekennzeichnet, daß die Eigenfrequenz des schwingungsgedämpften Griffsystems in allen drei Richtungskomponenten um den Faktor Wurzel 2 kleiner ist, als die schwingungserregende Schlagfrequénz.

28. Handwerkzeug nach einem der Ansprüche 15 bis 26, dadurch gekennzeichnet, daß die Eigenfrequenz des schwingungsgedämpften Griffsystems für Drehschwingungen um die Schlagachse (4) mindestens um den Faktor Wurzel 2 kleiner ist, als die schwingungserregende Lastdrehzahl.

## Claims

1. A damping device (5) comprising an approximately bell-shaped resilient rubber body (6) whose cavity (22) is filled with a damping fluid (17) and tightly sealed at ist bottom by a rubber diaphragm (7), and in which there is a base plate (8) and in this base plate (8) and in the portion of the resilient rubber body (6) opposite thereto there are arranged in symmetry with a centre line (16) fasteners (12, 12'), and in which the cavity (22) containing the damping fluid is subdivided by a partition (21) that is rigidly connected to the fastener (12) of the resilient rubber body (6) and oriented substantially perpendicular to the principal axis of load application (Z) and in which the thus partitioned cavity portions communicate with each other via at least one annular overflow passage (23') characterized in that a multitude of additional overflow passages (23) is provided in the partition (21), in that additional partitions (26) are provided and in that these additional partitions (26) are arranged at an angle relative to the partition (21) containing the overflow passages (23).

2. A damping device as in Claim 1 characterised in that the partition (21) containing the overflow passages (23) extends to within a short distance from an approximately cylindrical portion (25) of the wall of the resilient rubber body (6) and in this way forms an annular gap which also serves as an overflow passage (23').

3. A damping device as in Claim 1 or 2 characterised in that the additional partitions (26) are arranged radial from the centre line (16) of the resilient rubber body (6).

4. A damping device as in Claim 1 or 3 characterised in that the additional partitions (26) are arranged perpendicular to the partition (21) containing the overflow passages (23).

5. A damping device as in Claim 3 or 4 characterised in that the outer contour of the additional partitions (26) follows almost exactly the inner profile of the resilient rubber body (6).

6. A damping device as in either of Claims 3 to 5 characterised in that on the inner wall of the resilient rubber body (6) there are baffles (28) which extend into the space between the additional partitions (26) and which may have additional overflow passages.

7. A damping device as in either of Claims 1 to 6 characterised in that the additional partitions (26) form part of an impeller-like insertion member (20) that is axially symmetrical and firmly attached to the fastener (12') of the resilient rubber body (6).

8. A damping device as in Claim 1 characterised in that the partition (21) containing the overflow passages (23) is curved an in that the curvature is concave relative to the rubber diaphragm (7).

9. A damping device as in Claim 8 characterised in that the concave portion is reinforced by further partitions (29).

10. A damping device as in Claim 9 characterised in that the lower end of the further partitions (29) is flusch level with the outer edge (24) of the concave portion.

11. A damping device as in either of Claims 1 to 10 characterized in that the fastener (12') on the resilient rubber body side is a bush which is arranged perpendicular to the centre line (16).

12. A damping device as in Claims 7 and 11 characterised in that the insertion member (20) is connected to the bush (18) via a bolt-like connecting piece (19) which is tightly and firmly embedded in the resilient rubber body (6).

13. A damping device as in either of Claims 1 to 12 characterised in that there is above the rubber diaphragm (7), which seals the cavity (22) at its bottom, a stroke-limiting plate (40) for the rubber diaphragm 7, which has further overflow passages (23") and which is preferably held tightly captive between the rubber diaphragm (7) and the lip (9) of the resilient rubber body (6).

14. A damping device as in either of Claims 1 to 13 characterised in that the base plate (8) is arranged below the rubber diaphragm (7), which seals the cavity (22) at its bottom, in order to limit the downward stroke of the rubber diaphragm (7), and that there is an air chamber (14) between the rubber diaphragm (7) and the base plate (8) which is in communication with the atmosphere via at least one ventilation hole (15).

15. A motor-driven hand tool, more particularly an impact and/or drilling tool, a swing grinder, an angular grinder, a riveting, tacking or nailing tool, with a power unit accomodated in a housing (2) and at least one handle (1) which is connected to the housing (2) in a cushioned, flexible, manner for the reduction of vibrations and decelerated in its movement relative to the housing (2) by at least one damping device (5) characterised in that for the reduction and absorption of vibrations at least one damping device (5) as in either, or several, of Claims 1 to 15 (sic) is employed, which damping device(s) is (are) arranged between the handle (1) and the housing (2).

16. A hand tool as in Claim 15 with a tool bit (3) which can be propelled along an axis of impact (4) characterised in that the centre line (16) of the damping device (5) and the axis of impact (4) are parallel to each other, preferably even coinciding with each other.

17. A hand tool as in Claim 16 whose handle (1) is connected to the housing at least at two, preferably at three points characterised in that the connection which is in line with the axis of impact (4) is via the damping device (5) and in that the remaining, flexible, connections, arranged at a distance from the former, permit an oscillating movement between the handle (1) and the housing (2) about the axis of impact (4), which movement is cushioned by rubber bodies (38, 38', 39) (Figs. 7 and 8).

18. A hand tool as in Claim 17 characterised in that the handle (1) and the housing (2) have tow webs each (36, 36', 35, 35'), in that the webs (35, 35', 36, 36') of the housing (2) and the handle (1) overlap each other and in that between the webs (35, 36, 35', 36') there are the rubber bodies (38, 38').

19. A hand tool as in Claim 17 or 18 characterised in that through the webs (35, 35', 36, 36') and the rubber bodies (38, 38') there is inserted in the direction of the oscillating movement a guide pin (37) and in that the webs (35, 35', 36, 36') are in an approximately radial position relative to the axis of impact (4).

20. A hand tool as in Claim 19 characterised in that the guide pin (37) is supported by two webs (36, 36') or (35, 35') of the handle (1) or the housing (2) and held captive in a radially flexible manner between the two webs of the housing (2) of the handle (1) (sic) by a further rubber body (39).

21. A hand tool as in Claim 20 characterised in that the additional rubber body (39) is a tubular spring.

22. A hand tool as in Claim 21 characterised in that the tubular spring is radially accomodated in holes of the two inboard webs (35, 35').

23. A hand tool as in Claim 22 characterised in that the tubular spring is axially locked in place at its end faces against the outer webs (36, 36') via the two rubber bodies (38, 38') arranged between the webs (35, 36, 35', 36').

24. A hand tool as in Claim 15 characterised in that the handle (1) is connected to the housing (2) in a flexible manner via two damping devices (5) (sic) one of which (5) being arranged approximately in line with the axis of impact (4), while the other damping device (5') is arranged at a distance perpendicular therefrom (Fig. 6).

25. A hand tool as in either of Claims 15 to 24 characterised in that between the circumference of the handle (1) and the housing (2) there is an elastic seal (34), preferably a ring of plastic foam or a seal in the shape of bellows.

26. A hand tool as in Claim 11 or in either of Claims 15 to 24 characterised in that the bush (18) of the damping device (5) is accomodated between two side walls (32) in a hollow space (30) of the handle (1) and held captive by a bolt (31) inserted in the side walls (32).

27. A hand tool as in either of Claims 15 to 25 characterised in that the resonant frequency of the anti-vibration handle system in all three of the dimensional components is by a factor of root 2 lower than the impact frequency which generates the vibrations.

28. A hand tool as in either of Claims 15 to 26 characterised in that the resonant frequency of the anti-vibration handle system in the case of torsional oscillations about the axis of impact (4) is at least by a factor of root 2 lower than the speed of rotation under load which generates the oscillations.

**Revendications**

1. Elément amortisseur (5) avec un élément élastique en caoutchouc (6) sensiblement en forme de cloche dont le volume creux (22) est rempli d'un liquide amortisseur et fermé de manière étanche à sa partie inférieure par une membrane en caoutchouc (7), dans lequel une plaque de fond (8) et la région de l'élément élastique en caoutchouc (6) opposée à cette plaque de fond (8) présentent des moyens de fixation (12, 12') symétriques autour d'un axe médian (16) et dans lequel le volume creux (22) rempli de liquide amortisseur est divisé par une paroi de séparation (21) substantiellement perpendiculaire à la direction principale de sollicitation (Z) et liée rigidement au moyen de fixation (12) de l'élément élastique en caoutchouc (6), et les parties du volume creux ainsi séparées sont mises en communication entre elles par au moins un canal de décharge (23'), caractérisé en ce que, dans la paroi de séparation (21) sont ménagés des canaux de surcharge additionnels (23) et en ce que des parois de séparation supplémentaires (26) sont prévues et ces parois de séparation supplémentaires (26) ont une direction qui fait angle avec la paroi de séparation (21) présentant les canaux de décharge (23).

2. Elément amortisseur selon la revendication 1 caractérisé en ce que la paroi de séparation (21) présentant les canaux de décharge (23) s'étend jusqu'à proximité d'une partie de la paroi sensiblement cylindrique (25) de l'élément élastique en caoutchouc (6) et limite ainsi une fente annulaire agissant également comme canal de décharge (23').

3. Elément amortisseur selon la revendication 1 ou 2, caractérisé en ce que des parois de séparation supplémentaire (26) s'étendent en sens radial par rapport à l'axe médian (16) de l'élément élastique en caoutchouc (6).

4. Elément amortisseur selon la revendication 1 ou 3 caractérisé en ce que les parois de séparation supplémentaires (26) sont dirigées en sens perpendiculaire à la paroi de séparation (21) présentant les canaux de décharge (23).

5. Elément amortisseur selon la revendication 3 ou 4 caractérisé en ce que le contour du bord libre des parois de séparation supplémentaires (26) correspond sensiblement au contour interne de l'élément élastique en caoutchouc (6).

6. Elément amortisseur selon l'une des revendications 3 à 5 caractérisé en ce que sur la face interne de l'élément élastique en caoutchouc (16) sont prévues des surfaces de freinage (28) en saillie entre les parois de séparation supplémentaires (26).

7. Elément amortisseur selon l'une des revendications 1 à 6 caractérisé en ce que les parois de séparation supplémentaires (26) sont constituées par un insert (20) du type à ailettes radiales, qui est lié rigidement et symétriquement autour de l'axe avec le moyen de fixation (12') de l'élément élastique en caoutchouc (6).

8. Elément amortisseur selon la revendication 1 caractérisé en ce que la paroi de séparation (21) présentant les canaux de décharge (23) a une configuration en voûte et cette voûte est ouverte vers la membrane en caoutchouc (7).

9. Elément amortisseur selon la revendication 8 caractérisé en ce que la voûte est renforcée par des parois de séparation additionnelles (29) s'étendant radialement.

10. Elément amortisseur selon la revendication 9 caractérisé en ce que le bord inférieur des parois de séparation additionnelles (29) s'étend dans le plan du bord (24) de la voûte.

11. Elément amortisseur selon l'une des revendications 1 à 10 caractérisé en ce que le moyen de fixation (12') de l'élément élastique en caoutchouc est une douille s'étendant perpendiculairement à l'axe médian (16).

12. Elément amortisseur selon la revendication 7 et 11 caractérisé en ce que l'insert (20) est lié à la douille (18) par une pièce de liaison (19) analogue à un boulon disposée de manière ferme et étanche dans l'élément élastique en caoutchouc (6).

13. Elément amortisseur selon l'une des revendications 1 à 12 caractérisé en ce que au-dessus de la membrane en caoutchouc (7) fermant vers le bas le volume creux (22) est disposée pour cette membrane en caoutchouc (7) une plaque (40) de limitation de course traversée par des canaux de décharge supplémentaires (23"), qui est tenue avantageusement de manière étanche entre la membrane en caoutchouc (7) et le bord (9) de l'élément élastique en caoutchouc (6).

14. Elément amortisseur selon l'une des revendications 1 à 13 caractérisé en ce qu'il est prévu en dessous de la membrane en caoutchouc (7) fermant par le dessous le volume creux (22), une plaque de fond (8) pour limiter la course vers le bas de la membrane en caoutchouc (7), de telle sorte qu'il existe entre la membrane en caoutchouc (7) et la plaque de fond (8) une chambre d'air (14) qui est en communication avec l'atmosphère libre par au moins un trou de ventilation (15).

15. Outil à main motorisé, en particulier perceuse, ou/et perceuse à percussion, ponceuse vibrante, meuleuse d'angle, riveteuse, agrafeuse, cloueuse avec des organes d'entraînement prévus dans un carter (2), avec au moins une poignée (1) réunie de manière souple amortie au carter (2) pour l'atténuation des vibrations et freinée dans son mouvement relatif par rapport au carter (2) par au moins un élément amortisseur (5), caractérisé en ce que pour l'affaiblissement des vibrations et l'amortissement des oscillations, au moins un élément amortisseur (5), selon une ou plusieurs des revendications 1 à 15, est utilisé et disposé entre la poignée (1) et le carter (2).

16. Outil à main selon la revendication 15 pour un outil pouvant être poussé dans la direction d'un axe de percussion (4) caractérisé en ce que l'axe médian (16) de l'élément d'amortissement (5) et l'axe de percussion (4) s'étendent au moins parallèlement l'un à l'autre, mais sont de préférence en alignement.

17. Outil à main selon la revendication (16) dans lequel la poignée (1) est reliée au carter en au moins deux et de préférence trois points, caractérisé en ce que la liaison se trouvant en prolongement de l'axe de percussion (4) s'effectue à travers l'élément d'amortissement (5) et les autres liaisons souples prévues à un espacement de celui-ci tolèrent au moins un mouvement pendulaire amorti au moyen d'éléments en caoutchouc (38, 38', 39) entre la poignée (1) et le carter (2) autour de l'axe de percussion (4) (figures 7 et 8).

18. Outil à main selon la revendication 17, caractérisé en ce que la poignée (1) et le carter (2) présentent chacun deux oreilles (36, 36', 35, 35'), les oreilles (35, 35', 36, 36') du carter (2) et de la poignée (1) se recouvrent et entre les oreilles (35, 36, 35', 36') sont prévus les éléments en caoutchouc (38, 38').

19. Outil à main selon la revendication 17 ou 18 caractérisé en ce qu'il est prévu dans la direction du mouvement pendulaire un boulon de guidage (37), traversant les oreilles (35, 35', 36, 36') et les éléments en caoutchouc (38, 38'), les oreilles (35, 35', 36, 36') s'étendant sensiblement en sens radial par rapport à l'axe de percussion (4).

20. Outil à main selon la revendication 19 caractérisé en ce que le boulon de guidage (37) est tenu par deux oreilles (36, 36') ou (35, 35') de la poignée (1) ou du carter (2) et tenu élastiquement en sens radial par rapport aux deux oreilles du carter (2) et de la poignée (1) par un élément en caoutchouc supplémentaire (39).

21. Outil à main selon la revendication 20 caractérisé en ce que l'élément en caoutchouc supplémentaire (39) est une douille élastique.

22. Outil à main selon la revendication 21, caractérisé en ce que la douille élastique est tenue en sens radial dans des trous des deux oreilles intérieures (35, 35').

23. Outil à main selon la revendication 22, caractérisé en ce que la douille élastique est immobilisée en sens axial par ses faces extrêmes, par les deux éléments en caoutchouc (38, 38') prévus entre les oreilles (35, 35') et les oreilles extérieures (36, 36').

24. Outil à main selon la revendication 15 caractérisé en ce que la poignée (1) est réunie élastiquement au carter (2) à travers deux éléments amortisseurs (5), de façon telle que l'un des éléments amortisseurs (5) est prévu à peu près dans le prolongement de l'axe de percussion (4) et l'autre élément amortisseur (5) est prévu avec un espacement en sens vertical par rapport au premier élément (figure 6).

25. Outil à main selon l'une des revendications 15 à 24 caractérisé en ce que, entre le bord périmétrique de la poignée (1) et le carter (2) est prévu un élément élastique d'étanchéité (34), de préférence un anneau en mousse de matière synthétique ou un soufflet.

26. Outil à main selon la revendication 11 ou l'une des revendications 15 à 24, caractérisé en ce que la douille (18) de l'élément d'amortissement (5) est contenue entre deux parois latérales (32) dans une partie creuse (30) de la poignée (1) et est fixée par un boulon (31) tenu par les parois latérales (32).

27. Outil à main selon l'une des revendications 15 à 26 caractérisé en ce que la fréquence propre du système d'amortissement des oscillations de la poignée dans les trois directions composantes est plus petite d'un facteur racine de deux que la fréquence de percussion entretenant les oscillations.

28. Outil à main selon les revendications 15 à 26 caractérisé en ce que la fréquence propre du système de la poignée amortissant les oscillations pour les oscillations de torsion autour de l'axe de percussion (4) est plus petite d'un facteur racine de deux au moins que le nombre de tours de rotation en charge entretenant les oscillations.

FIG. 1

FIG. 2

ERREGUNGSFUNKTION

ANTWORTFUNKTION

FIG. 3

FIG. 4

0 165 341

FIG. 5

FIG. 6

0 165 341

FIG. 8

FIG. 7

## FIG. 9